# EUROPÄISCHE PATENTANMELDUNG

(11) **EP 4 253 933 A1**
(43) Veröffentlichungstag der Anmeldung: **04.10.2023**
(21) Anmeldenummer: 20962685.2
(22) Anmeldetag: 24.11.2020
(51) Int. Cl.: G01M 13/04

(54) **WÄLZLAGERANORDNUNG ZUR DURCHFÜHRUNG EINER SELBSTÜBERWACHUNG**

(71) Anmelder: Schaeffler Technologies AG & Co. KG, 91074 Herzogenaurach (DE)
(72) Erfinder: GUAN, Ran, Shanghai 201104 (CN); XIA, Xiangrui, Shanghai 201804 (CN); XU, Jingfeng, Shanghai 201804 (CN); WANG, Suxia, Jiangsu 215400 (CN)
(86) Internationale Anmeldenummer: PCT/CN2020/131185
(87) Internationale Veröffentlichungsnummer: WO 2022/109794

(57) **Zusammenfassung**

Wälzlageranordnung, die in der Lage ist, eine Selbstüberwachung zu realisieren. Die Wälzlageranordnung umfasst ein Wälzlager, wobei das Wälzlager einen Ring und einen drahtlosen Sensor umfasst. Der Ring ist mit einer Montagenut versehen, wobei der drahtlose Sensor in der Montagenut montiert ist; und die Montagenut befindet sich in einer Umfangsfläche des Rings und hat eine Öffnung, die in der axialen Richtung des Wälzlagers offen ist, und/oder die Montagenut befindet sich in einer axialen Endfläche des Rings und hat eine Öffnung, die in der radialen Richtung des Wälzlagers offen ist. Die in axialer Richtung offene Öffnung der Montagenut in der Umfangsfläche des Rings und/oder die in radialer Richtung offene Öffnung der Montagenut in der axialen Stirnfläche des Rings dienen als Fenster für die Kommunikation zwischen dem drahtlosen Sensor und der Außenseite, so dass der drahtlose Sensor in der Montagenut montiert ist und auch gut mit der Außenseite kommuniziert. Dementsprechend überwacht der drahtlose Sensor in Echtzeit den Ring des Wälzlagers, und der Teil des Wälzlagers zur Montage des drahtlosen Sensors hat eine einfache Struktur und ist leicht zu bearbeiten.

## Beschreibung

### Technischer Bereich

Die vorliegende Erfindung bezieht sich auf das technische Gebiet der Lager, insbesondere auf eine Wälzlageranordnung, die in der Lage ist, eine Selbstüberwachung zu realisieren.

### Hintergrund

Gegenwärtig besteht die Notwendigkeit, ein Wälzlager im Betrieb zu überwachen, z. B. durch Überwachung der Temperatureigenschaften, der Schwingungseigenschaften und dergleichen eines festen Rings des Wälzlagers, wobei der feste Ring online durch einen externen Sensor überwacht werden kann.

Was die Überwachung eines rotierenden Rings betrifft, so bieten der Stamd der Technik Lösungen durch die Anordnung von drahtlosen Sensoren. Die Montage der drahtlosen Sensoren ist jedoch kompliziert und führt zu einer komplizierten Lagerstruktur, was die Bearbeitung des Lagers erschwert.

### Beschreibung

Der Zweck der vorliegenden Erfindung ist es, die oben genannten Mängel des Standes der Technik zu überwinden oder zumindest zu mildern und eine Wälzlageranordnung bereitzustellen, die in der Lage ist, eine Selbstüberwachung zu realisieren. Ein rotierender Ring des Wälzlagers kann in Echtzeit durch einen drahtlosen Sensor überwacht werden, und das Wälzlager hat eine einfache Struktur.

Es wird eine Wälzlageranordnung bereitgestellt, die in der Lage ist, eine Selbstüberwachung zu realisieren, wobei die Wälzlageranordnung ein Wälzlager umfasst, das Wälzlager zumindest einen Ring und einen drahtlosen Sensor umfasst und der Ring mit einer Montagenut versehen ist und der drahtlose Sensor in der Montagenut angebracht ist, wobei sich die Montagenut in einer Umfangsfläche des Rings befindet und eine Öffnung aufweist, die in axialer Richtung des Wälzlagers offen ist und/oder die Montagenut befindet sich in einer axialen Stirnfläche des Rings und hat eine Öffnung, die in radialer Richtung des Wälzlagers offen ist.

Vorzugsweise weist die Montagenut in der axialen Stirnfläche des Rings eine Positioniereinrichtung zur Positionierung des drahtlosen Sensors in Umfangsrichtung und in radialer Richtung des Wälzlagers auf.

Vorzugsweise weist die Montagenut in der Umfangsfläche des Rings eine Positioniereinrichtung zur Positionierung des drahtlosen Sensors in Umfangsrichtung und in axialer Richtung des Wälzlagers auf.

Vorzugsweise besteht der Ring aus einem Außenring, und eine einem Wälzkörper des Wälzlagers abgewandte Außenumfangsfläche des Außenrings ist mit der Montagenut versehen.

Vorzugsweise besteht der Ring aus einem Innenring, und eine axiale Endfläche des Innenrings ist mit der Montagenut versehen.

Vorzugsweise bilden Nutseitenwände der Montagenut und an den Nutseitenwänden angeordnete Ausnehmungen das Positioniermerkmal, und/oder die Nutseitenwände der Montagenut und eine an einer Nutbodenwand der Montagenut angeordnete Stufe das Positionierungsmerkmal bilden das Positioniermerkmal.

Vorzugsweise bilden die Nutseitenwände der Montagenut das Positionierungsmerkmal, und die Breite der Öffnung entlang der Umfangsrichtung ist kleiner als die eines axialen inneren Abschnitts oder eines radialen Zwischenabschnitts der Montagenut entlang der Umfangsrichtung.

Vorzugsweise umfasst die Wälzlagerbaugruppe außerdem eine rotierende Welle, die mit dem Innenring verbunden ist, und die rotierende Welle positioniert den drahtlosen Sensor in einer axialen Richtung des Innenrings.

Vorzugsweise umfasst die Wälzlagerbaugruppe ferner einen Lagersitz, der mit dem Außenring verbunden ist, und der Lagersitz positioniert den drahtlosen Sensor in einer radialen Richtung des Außenrings.

Vorzugsweise ist der drahtlose Sensor mit der Montagenut verklebt.

Mit der oben genannten technischen Lösung können zumindest die folgenden Vorteile erreicht werden:
Die in axialer Richtung offene Öffnung der Montagenut in der Umfangsfläche des Rings und/oder die in radialer Richtung offene Öffnung der Montagenut in der Stirnfläche des Rings dienen als Fenster für die Kommunikation zwischen dem drahtlosen Sensor und der Außenseite, so dass der drahtlose Sensor in der Montagenut montiert ist und auch gut mit der Außenseite kommuniziert. Dementsprechend überwacht der drahtlose Sensor in Echtzeit den Ring des Wälzlagers, und der Teil des Wälzlagers zur Montage des drahtlosen Sensors hat eine einfache Struktur und ist leicht zu bearbeiten.

### Kurzbeschreibung der Zeichnungen

FIG. 1 ist eine Explosionsdarstellung einer spezifischen Ausführungsform einer Wälzlageranordnung, die in der Lage ist, die Selbstüberwachung gemäß der vorliegenden Offenbarung zu realisieren.
Fig. 2 ist eine schematische Ansicht einer ersten Ausführungsform einer Montagenut eines Außenrings einer Wälzlageranordnung, die eine Selbstüberwachung realisieren kann.
FIG. 3 ist eine schematische Ansicht einer zweiten Ausführungsform einer Montagenut eines Außenrings einer Wälzlageranordnung, die eine Selbstüberwachung realisieren kann.
FIG. 4 ist eine schematische Ansicht einer dritten Ausführungsform einer Montagenut eines Außenrings einer Wälzlageranordnung, die eine Selbstüberwachung realisieren kann.
FIG. 5 ist eine schematische Ansicht einer ersten Ausführungsform einer Montagenut eines Innenrings einer Wälzlageranordnung, die eine Selbstüberwachung realisieren kann.
FIG. 6 ist eine schematische Ansicht einer zweiten Ausführungsform einer Montagenut eines Innenrings einer Wälzlageranordnung, die eine Selbstüberwachung realisieren kann.
FIG. 7 ist eine schematische Ansicht einer dritten Ausführungsform einer Montagenut eines Innenrings einer Wälzlageranordnung, die eine Selbstüberwachung realisieren kann.
FIG. 8 ist eine schematische Ansicht einer spezifischen Ausführungsform eines drahtlosen Sensors.

### Detaillierte Beschreibung

Beispielhafte Ausführungsformen der vorliegenden Erfindung werden im Folgenden unter Bezugnahme auf die beigefügten Zeichnungen beschrieben.

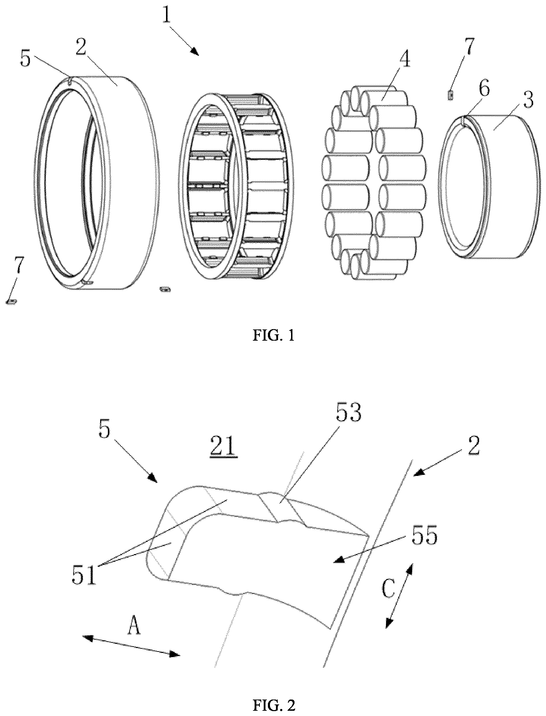

Wie in Fig. 1 gezeigt, stellt die vorliegende Offenbarung eine Wälzlageranordnung bereit, die in der Lage ist, eine Selbstüberwachung zu realisieren, wobei die Wälzlageranordnung ein Wälzlager 1 umfasst, das Wälzlager 1 einen Ring und einen Wälzkörper 4 umfasst und der Ring einen festen Ring 2 und einen rotierenden Ring 3 umfasst. In der dargestellten Ausführungsform ist der feste Ring 2 beispielsweise ein Außenring und der rotierende Ring 3 ein Innenring.

In anderen, nicht dargestellten Ausführungsformen kann der feste Ring 2 ein Innenring und der Drehring 3 ein Außenring sein.

Das Wälzlager 1 umfasst außerdem einen drahtlosen Sensor 7. Der drahtlose Sensor 7 ist z. B. an dem festen Ring 2 und dem rotierenden Ring 3 des Wälzlagers 1 befestigt. Der drahtlose Sensor 7 kann den rotierenden Ring 3 und den festen Ring 2 in Echtzeit überwachen. Der drahtlose Sensor 7 kann sich mit dem rotierenden Ring 3 drehen, während er den rotierenden Ring 3 ohne externe Drähte überwacht.

Die Wälzlagerbaugruppe kann beispielsweise drei drahtlose Sensoren 7 umfassen, wobei zwei drahtlose Sensoren 7 auf dem festen Ring 2 und ein drahtloser Sensor 7 auf dem rotierenden Ring 3 angeordnet sind. Die Anzahl und die Positionen der drahtlosen Sensoren 7 können unter Berücksichtigung der Vermeidung eines Lagerbereichs des Lagers, der Erleichterung der Lagermontage, der Verbesserung der Signalstärke, der Verringerung der Bearbeitungskosten und der Verbesserung der Durchführbarkeit sowie entsprechend den Überwachungsanforderungen festgelegt werden.

Mehrere drahtlose Sensoren 7 können an verschiedenen Positionen desselben Rings angeordnet werden, so dass eine Online-Überwachung verschiedener Positionen möglich ist.

Wie in FIG. 2 bis FIG. 7 dargestellt, weist das Wälzlager 1 eine Montagenut 5, 6 zur Befestigung des drahtlosen Sensors 7 auf, wobei die Montagenut 5 in dem feststehenden Ring 2 und die Montagenut 6 in dem rotierenden Ring 3 angeordnet ist. Die Montagenut 5, 6 ist so angeordnet, dass der drahtlose Sensor 7 eine axiale Begrenzung und eine radiale Begrenzung des Wälzlagers 1 nicht überschreitet, wenn er in der Montagenut 5, 6 montiert ist, und somit der drahtlose Sensor 7 die Montage des Wälzlagers 1 im Wesentlichen nicht beeinträchtigt.

Die Montagenut 5 befindet sich beispielsweise in einer dem Wälzkörper 4 abgewandten Außenumfangsfläche 21 des feststehenden Rings 2, beispielsweise einer Außenumfangsfläche des Außenrings, und der drahtlose Sensor 7 kann entlang einer radialen Richtung R in der Montagenut 5 befestigt werden.

Die Montagenut 5 kann in einer axialen Kante der äußeren Umfangsfläche 21 des Festrings 2 angeordnet sein, und die Montagenut 5 hat eine Öffnung 55, die in einer axialen Richtung A des Wälzlagers 1 an der axialen Kante der äußeren Umfangsfläche 21 des Festrings 2 offen ist. Durch die Öffnung 55 kommuniziert der drahtlose Sensor 7 mit einem externen Gerät.

In anderen Ausführungsformen kann die Position der Montagenut 5 verändert werden. Zum Beispiel kann die Montagenut 5 in einer Hälfte der äußeren Umfangsfläche 21 des feststehenden Rings 2 in axialer Richtung A o.ä. liegen, solange die Montagenut 5 die Öffnung 55 hat, die in axialer Richtung A offen ist.

Die in axialer Richtung offene Öffnung 55 der Montagenut 5 dient als Fenster für die Kommunikation zwischen dem drahtlosen Sensor 7 und der Außenwelt, so dass der drahtlose Sensor 7 in der Montagenut 5 montiert ist und auch mit der Außenwelt kommuniziert. Dementsprechend überwacht der drahtlose Sensor 7 in Echtzeit den festen Ring 2 des Wälzlagers 1, und der Teil des Wälzlagers 1 zur Montage des drahtlosen Sensors 7 hat eine einfache Struktur und ist leicht zu bearbeiten.

Die Montagenut 5 hat eine Positionierungsfunktion, die den drahtlosen Sensor 7 in der axialen Richtung A und einer Umfangsrichtung C des Wälzlagers 1 positionieren kann, wodurch die Positionierung des drahtlosen Sensors 7 verbessert wird, z. B. durch eine doppelte Absicherung der Positionierung des drahtlosen Sensors 7 auf der Grundlage, dass der drahtlose Sensor 7 mit dem Wälzlager 1 verbunden ist.

Wie in FIG. 2 dargestellt, kann das Positionierungsmerkmal in der ersten Ausführungsform durch Nutseitenwände 51 der Montagenut 5 und an den Nutseitenwänden 51 angeordnete Ausnehmungen 53 gebildet werden. Die Nutseitenwände 51 dienen zur Positionierung des drahtlosen Sensors 7 in Umfangsrichtung C des Wälzlagers 1, und die Ausnehmungen 53 dienen zur Positionierung des drahtlosen Sensors 7 in axialer Richtung A des Wälzlagers 1. Die Ausnehmungen 53 haben z.B. Innenflächen mit glatten Übergängen. Die Ausnehmungen 53 sind z.B. an zwei gegenüberliegenden Nutseitenwänden 51 der Montagenut 5 angeordnet.

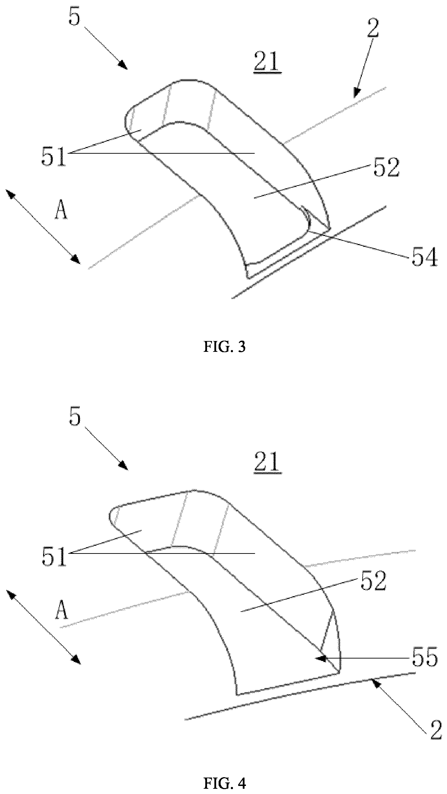

Wie in FIG. 3 dargestellt, kann das Positionierungsmerkmal bei der zweiten Ausführungsform durch die Nutseitenwände 51 der Montagenut 5 und eine Stufe 54 gebildet werden, die an einer Nutbodenwand 52 der Montagenut 5 angeordnet ist. Die Stufe 54 kann an einem axialen äußeren Ende (dem Ende der Montagenut 5, das von einer axialen Mitte des Rings in der axialen Richtung A entfernt ist) der Montagenut 5 angeordnet sein, ein axiales inneres Ende (das Ende der Montagenut 5 in der Nähe der axialen Mitte des Rings in der axialen Richtung A) der Montagenut 5 ist mit den Nutseitenwänden 51 versehen, und die Nutseitenwände 51 und die Stufe 54 positionieren zusammen den drahtlosen Sensor 7 in der axialen Richtung A des Wälzlagers 1.

Wie in Fig. 4 gezeigt, kann in der dritten Ausführungsform das Positionierungsmerkmal durch die Nutseitenwände 51 der Montagenut 5 gebildet werden, und die Breite der Öffnung 55 der Nutseitenwände 51 entlang der Umfangsrichtung C kann kleiner sein als die eines axialen inneren Abschnitts der Montagenut 5 entlang der Umfangsrichtung C, und somit hat die Montagenut 5 eine Öffnungsschließform. Die Öffnung 55 kann am axialen äußeren Ende der Montagenut 5 angeordnet sein, das axiale innere Ende der Montagenut 5 ist mit den Nutseitenwänden 51 versehen, und die Nutseitenwände 51 und die Öffnung 55 positionieren zusammen den drahtlosen Sensor 7 in der axialen Richtung A des Wälzlagers 1.

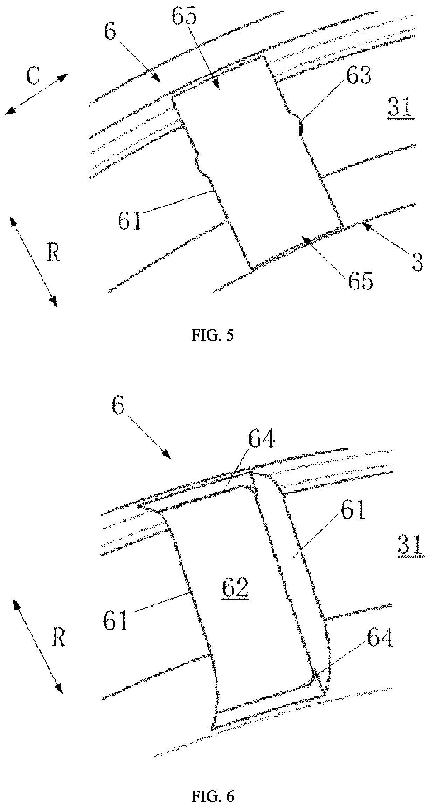

Wie in FIG. 5 bis FIG. 7 gezeigt, umfasst das Wälzlager 1 eine Montagenut 6, die sich im Drehring 3 befindet, die Montagenut 6 befindet sich in einer Endfläche 31 des Drehrings 3, beispielsweise in der Endfläche 31 des Innenrings, und der drahtlose Sensor 7 kann an der Montagenut 6 entlang der axialen Richtung A befestigt werden.

Die Montagenut 6 kann sich von einer radialen Innenseite zu einer radialen Außenseite der Stirnfläche 31 des Drehrings 3 erstrecken, und die Montagenut 6 hat eine Öffnung 65, die in einer radialen Richtung R des Wälzlagers 1 an einem radialen Rand der Stirnfläche des Drehrings 3 offen ist. Durch die in radialer Richtung R nach außen offene Öffnung 65 kann der drahtlose Sensor 7 mit dem externen Gerät kommunizieren.

Darüber hinaus kann der drahtlose Sensor 7 auch durch einen Teil der Montagenut 6, der nicht z. B. durch eine Schulter einer sich drehenden Welle blockiert ist, in axialer Richtung A nach außen kommunizieren.

Es versteht sich, dass die der Drehwelle abgewandte Seite des Drehrings 3 den Wälzkörper 4 aufweist, der Wälzkörper 4 in axialer Richtung im Allgemeinen kürzer ist als der Drehring 3, und der radiale Rand des Drehrings 3 im Allgemeinen eine Fase aufweist, so dass die in der Stirnseite des Drehrings 3 angeordnete Montagenut 6 die in radialer Richtung nach außen offene Öffnung 65 aufweist.

Die Öffnung 65 auf der von der Drehwelle abgewandten Seite des Drehrings 3 ist offen, während die Öffnung 65 auf der der Drehwelle zugewandten Seite im Allgemeinen durch die Drehwelle blockiert ist und sich nicht in einem offenen Zustand befindet. Wenn zum Beispiel der Innenring als Drehring 3 verwendet wird, ist die Öffnung 65 an einer radialen Innenkante normalerweise durch die Drehwelle im offenen Zustand blockiert, und die Öffnung 65 an einer radialen Außenkante ist im offenen Zustand.

In anderen Ausführungsformen kann die Position der Montagenut 6 verändert werden, z.B. kann die Montagenut 6 auf einer Hälfte der radialen Innenseite oder einer Hälfte der radialen Außenseite der Stirnfläche 31 des Drehrings 3 liegen, solange die Montagenut 6 die Öffnung 65 hat, die in radialer Richtung R offen ist.

Die in radialer Richtung R offene Öffnung 65 der Montagenut 6 dient als Fenster für die Kommunikation zwischen dem drahtlosen Sensor 7 und der Außenwelt, so dass der drahtlose Sensor 7 in der Montagenut 6 montiert ist und auch mit der Außenwelt kommuniziert. Dementsprechend überwacht der drahtlose Sensor 7 in Echtzeit den rotierenden Ring 3 des Wälzlagers 1, und der Teil des Wälzlagers 1 zur Montage des drahtlosen Sensors 7 hat eine einfache Struktur und ist leicht zu bearbeiten.

Die Positionierung der Montagenut 6 des Drehrings 3 ähnelt derjenigen der Montagenut 5 des Festrings 2, die oben beschrieben wurde, und der Unterschied zwischen den beiden wird im Folgenden beschrieben.

Wie in FIG. 5 dargestellt, wird in der ersten Ausführungsform das Positionierungsmerkmal durch Nutseitenwände 61 und an den Nutseitenwänden 61 angeordnete Ausnehmungen 63 gebildet. Die Rillenseitenwände 61 dienen der Positionierung des drahtlosen Sensors 7 in Umfangsrichtung C des Wälzlagers 1, die Ausnehmungen 63 dienen der Positionierung des drahtlosen Sensors 7 in radialer Richtung R des Wälzlagers 1. Die Ausnehmungen 63 haben z.B. Innenflächen mit glatten Übergängen. Die Ausnehmungen 63 sind z. B. an zwei gegenüberliegenden Nutseitenwänden 61 der Montagenut 6 angeordnet.

Wie in FIG. 6 dargestellt, kann in der zweiten Ausführungsform das Positionierungsmerkmal durch die Nutseitenwände 61 und eine Stufe 64 gebildet werden, die an einer Nutbodenwand 62 der Montagenut 6 angeordnet ist. Die Stufe 64 kann z. B. an beiden radialen Enden der Montagenut 6 angeordnet sein und dient damit der Positionierung des drahtlosen Sensors 7 in radialer Richtung R des Wälzlagers 1.

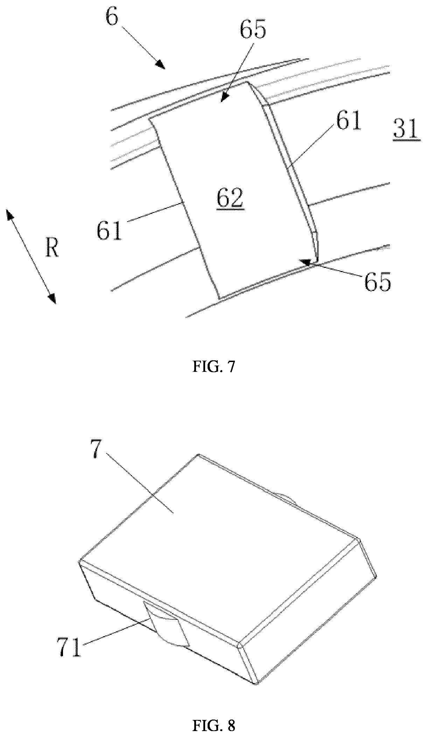

Wie in Fig. 7 gezeigt, kann in der dritten Ausführungsform das Positionierungsmerkmal durch die Nutseitenwände 61 der Montagenut 6 gebildet werden, die Breite der Öffnung 65 der Nutseitenwände 61 entlang der Umfangsrichtung C kann kleiner sein als die eines radialen Zwischenabschnitts der Montagenut 6 entlang der Umfangsrichtung C, und somit hat die Montagenut 6 eine Öffnungsschließform. Die Montagenut 6 kann zwei Öffnungen 65 aufweisen, und die beiden Öffnungen 65 befinden sich an beiden radialen Enden der Montagenut 6, so dass die Nutseitenwände 61 den drahtlosen Sensor 7 in der radialen Richtung R des Wälzlagers 1 an den beiden Öffnungen 65 positionieren.

Wie in FIG. 8 dargestellt, hat der drahtlose Sensor 7, der mit der Montagenut 5, 6 mit den Ausnehmungen 53, 63 montiert ist, Nasen 71, und die Nasen 71 sind mit den Ausnehmungen 53, 63 zusammengebaut. Der drahtlose Sensor 7, der mit der Montagenut 5, 6 montiert ist, die die Stufe 54, 64 oder die öffnende und schließende Form hat, kann die oben erwähnten Nasen 71 nicht haben.

Natürlich können die Merkmale der verschiedenen oben beschriebenen Ausführungsformen auch kombiniert werden.

Die Wälzlagerbaugruppe kann ferner einen Lagersitz, der mit dem festen Ring 2 verbunden ist, und eine Drehwelle, die mit dem Drehring 3 verbunden ist, umfassen. Der Lagersitz befindet sich an einer radialen Außenseite des drahtlosen Sensors 7, wodurch der drahtlose Sensor 7 in der radialen Richtung R des festen Rings 2 positioniert wird. Die Drehwelle, z. B. eine Schulter der Drehwelle, positioniert den drahtlosen Sensor 7 in der axialen Richtung A des Drehrings 3.

Der Lagersitz und die rotierende Welle können auch die Positionierung des drahtlosen Sensors 7 verbessern, da der drahtlose Sensor 7 mit dem Wälzlager 1 verbunden ist, wodurch eine doppelte Absicherung der Positionierung des drahtlosen Sensors 7 erreicht wird.

Der oben erwähnte drahtlose Sensor 7 ist z. B. ein Temperatursensor.

Natürlich ist die vorliegende Erfindung nicht auf die oben genannten Ausführungsformen beschränkt, und ein Fachmann könnte verschiedene Modifikationen an den oben genannten Ausfiihrungsformen der vorliegenden Erfindung vornehmen, die sich an der vorliegenden Erfindung orientieren, ohne vom Anwendungsbereich der vorliegenden Erfindung abzuweichen.

### LISTE DER REFERENZNUMMERN

1 Wälzlager,
2 fester Ring,
21 äußere Umfangsfläche,
3 Drehender Ring,
31 Stirnseite,
4 Wälzkörper,
5, 6 Montagenut,
51, 61 Rillenseitenwand,
52, 62 Rillenunterwand,
53, 63 Aussparung,
54, 64 Schritt,
55, 65 Öffnung,
7 drahtloser Sensor,
71 Lasche.

## Patentansprüche

1. Wälzlageranordnung, die in der Lage ist, eine Selbstüberwachung zu realisieren, mit einem Wälzlager (1), wobei das Wälzlager (1) einen Ring und einen drahtlosen Sensor (7) aufweist, der Ring mit einer Montagenut (5, 6) versehen ist, der drahtlose Sensor (7) in der Montagenut (5, 6) montiert ist, wobei
die Montagenut (5, 6) in einer Umfangsfläche des Rings angeordnet ist und eine Öffnung (55) aufweist, die in axialer Richtung des Wälzlagers (1) offen ist und/oder die Montagenut (5, 6) in einer axialen Stirnfläche des Rings angeordnet ist und eine Öffnung (65) aufweist, die in radialer Richtung des Wälzlagers (1) offen ist.

2. Selbstüberwachungsfähige Wälzlageranordnung nach Anspruch 1, **dadurch gekennzeichnet, dass** die in der axialen Stirnfläche des Ringes angeordnete Montagenut (6) eine Positioniereinrichtung zur Positionierung des drahtlosen Sensors (7) in Umfangsrichtung und radialer Richtung des Wälzlagers (1) aufweist.

3. Selbstüberwachungsfähige Wälzlageranordnung nach Anspruch 1, **dadurch gekennzeichnet, dass** die in der Umfangsfläche des Ringes angeordnete Montagenut (5) eine Positioniereinrichtung zur Positionierung des drahtlosen Sensors (7) in Umfangsrichtung und in axialer Richtung des Wälzlagers (1) aufweist.

4. Selbstüberwachungsfähige Wälzlageranordnung nach Anspruch 1, **dadurch gekennzeichnet, dass** der Ring einen Außenring umfasst und eine von einem Wälzkörper des Wälzlagers (1) abgewandte Außenumfangsfläche (21) des Außenrings mit der Montagenut (5) versehen ist.

5. Selbstüberwachende Wälzlageranordnung nach Anspruch 1, **dadurch gekennzeichnet, dass** der Ring einen Innenring aufweist und eine axiale Stirnfläche des Innenrings mit der Montagenut (6) versehen ist.

6. Selbstüberwachungsfähige Wälzlageranordnung nach Anspruch 2 oder 3, **dadurch gekennzeichnet, dass** Nutseitenwände (51, 61) der Montagenut (5, 6) und an den Nutseitenwänden (51, 61) angeordnete Ausnehmungen (53, 63) das Positioniermerkmal bilden, und/oder
die Nutseitenwände (51, 61) der Montagenut (5, 6) und eine an einer Nutbodenwand (52, 62) der Montagenut (5, 6) angeordnete Stufe (54, 64) das Positionierungsmerkmal bilden.

7. Selbstüberwachende Wälzlageranordnung nach Anspruch 2 oder 3, **dadurch gekennzeichnet, dass** die Nutseitenwände (51, 61) der Montagenut (5, 6) das Positionierungsmerkmal bilden und die Breite der Öffnung (55, 65) in Umfangsrichtung kleiner ist als die eines axialen Innenbereichs oder eines radialen Zwischenbereichs der Montagenut (5, 6) in Umfangsrichtung.

8. Wälzlageranordnung, die in der Lage ist, eine Selbstüberwachung nach Anspruch 5 zu realisieren, **dadurch gekennzeichnet, dass** die Wälzlageranordnung ferner eine rotierende Welle umfasst, die mit dem Innenring montiert ist, und dass die rotierende Welle den drahtlosen Sensor (7) in einer axialen Richtung des Innenrings positioniert.

9. Wälzlageranordnung, die in der Lage ist, eine Selbstüberwachung nach Anspruch 4 zu realisieren, **dadurch gekennzeichnet, dass** die Wälzlageranordnung ferner einen Lagersitz umfasst, der mit dem Außenring montiert ist, und dass der Lagersitz den drahtlosen Sensor (7) in einer radialen Richtung des Außenrings positioniert.

10. Selbstüberwachende Wälzlageranordnung nach Anspruch 1, **dadurch gekennzeichnet, dass** der drahtlose Sensor (7) mit der Montagenut (5, 6) verklebt ist.
